# EUROPÄISCHE PATENTSCHRIFT

(11) **EP 2 977 472 B1**
(45) Veröffentlichungstag und Bekanntmachung des Hinweises auf die Patenterteilung: **02.11.2016**
(21) Anmeldenummer: 15184535.1
(22) Anmeldetag: 18.09.2013
(51) Int. Cl.: C21D 7/13, B21D 35/00, C21D 11/00, C21D 1/18, C21D 1/673, B21J 1/06, C21D 9/46, B21D 22/02, C21D 8/00, C21D 1/34, C22C 38/00, C22C 38/02, C22C 38/04, C22C 38/06, C22C 38/12, C22C 38/14

(54) **TEMPERIERSTATION ZUR TEMPERIERUNG VON BLECHPLATINEN**
TEMPERING STATION FOR TEMPERING OF SHEET METAL CIRCUIT BOARDS
STATION DE CHAUFFAGE DE PLATINES EN TOLE

(30) Priorität: 07.11.2012 DE 102012110649
(43) Veröffentlichungstag der Anmeldung: 27.01.2016
(62) Teilanmeldung aus: 13184929.1
(73) Patentinhaber: Benteler Automobiltechnik GmbH, 33102 Paderborn (DE)
(72) Erfinder: Trippe, Carsten, 33154 Salzkotten (DE); Wulfes, Dieter, 33178 Borchen (DE); Adelbert, Stefan, 33129 Delbrück (DE); Danger, Elisabeth, 33100 Paderborn (DE)
(74) Vertreter: Griepenstroh, Jörg

(56) Entgegenhaltungen:
- EP-A1- 2 014 777
- EP-A1- 2 182 081
- EP-A1- 2 182 082
- DE-B3-102010 004 081
- DE-B3-102010 048 209

## Beschreibung

Die vorliegende Erfindung betrifft eine Temperierstation zur Temperierung von Blechplatinen gemäß den Merkmalen im Oberbegriff von Patentanspruch 1.

Aus dem Stand der Technik ist es bekannt, Kraftfahrzeugkarosserien aus metallischen Werkstoffen herzustellen. Hierzu werden insbesondere Stahlwerkstoffe oder aber auch Leichtmetallwerkstoffe eingesetzt. Innerhalb der letzten Jahre wurden im Bereich der Stahlwerkstoffe hochfeste und höchstfeste Stähle eingesetzt, die zumindest partiell hohe Härten oder aber duktile Eigenschaften aufweisen, so dass die Festigkeit und auch die Crashperformance einer Kraftfahrzeugkarosserie gesteigert wird, bei gleichzeitiger Gewichtseinsparung.

So ist beispielsweise aus der DE 10 2010 004 081 B3 ein Vergütungsverfahren zum Herstellen von Stahlblechplatinen mit mindestens zwei Gefügebereichen unterschiedlicher Duktilität bekannt. Hierzu wird eine Platine zunächst in einem Ofen auf eine Temperatur homogen erwärmt und anschließend in einer Heizstation in zumindest Teilbereichen weiter auf eine Temperatur oberhalb der Austenitisierungstemperatur (AC3) erwärmt. Die Platine wird im Anschluss daran formgepresst und durch Abschrecken gehärtet.

Hierzu sind aus der EP 2 182 082 A1 sowie der EP 2 014 777 A1 ein Verfahren und eine Vorrichtung zur Temperierung eines Stahlblechkörpers bekannt. Ein zu erwärmender Stahlblechkörper wird mit einer erwärmten Temperierplatte kontaktiert und aufgrund von Wärmeleitung erwärmt. Die Temperierplatte selbst wird induktiv oder konduktiv durch eine externe Wärmequelle erwärmt. Die Tempierplatte weist somit bei Kontaktierung eine Temperatur zwischen 300° und 800° C auf.

Die Aufgabe der vorliegenden Erfindung ist es, ausgehend vom Stand der Technik eine Vorrichtung aufzuzeigen, mit der es möglich ist, Blechbauteile mit geringem Energiebedarf zu temperieren, wobei die Anschaffungskosten für eine Vorrichtung ebenfalls gering ausfallen sollen.

Die zuvor genannte Aufgabe wird erfindungsgemäß mit einer Temperierstation gemäß den Merkmalen im Patentanspruch 1 gelöst.

Vorteilhafte Ausführungsvarianten der vorliegenden Erfindung sind Bestandteil der abhängigen Patentansprüche.

Die erfindungsgemäße Temperierstation eignet sich zum Einsatz in einer Warmformlinie mit einer Erwärmungsvorrichtung und einer Umformvorrichtung zur Herstellung warmumgeformter und pressgehärteter Stahlblechprodukte, insbesondere zur Herstellung von Kraftfahrzeugbauteilen, wobei die Erwärmungsvorrichtung wiederum die Temperierstation mit einem Oberwerkzeug und einem Unterwerkzeug aufweist. Die Temperierstation ist erfindungsgemäß dadurch gekennzeichnet, dass sie mindestens eine Temperierquelle zum Heizen aufweist und an dem Oberwerkzeug und/oder dem Unterwerkzeug austauschbare Temperierplatten zur konduktiven Temperierung angeordnet sind, wobei die Temperierplatten selbst als elektrischer Widerstand ausgebildet sind und auf über 1.000° C erwärmbar sind.

Mit dem erfindungsgemäßen Temperierwerkzeug ist es somit möglich, in energetisch sinnvoller Weise die in der Warmformlinie zu bearbeitenden Blechplatinen und/oder Blechbauteile entsprechend zu temperieren. Dabei kann das Temperieren beispielsweise ein Heizen, insbesondere ein Heizen oder aber Erwärmen auf über AC3 Temperatur, sein. Im Rahmen der Erfindung ist es aufgrund der austauschbaren Temperierplatten möglich, sowohl Blechplatinen, mithin flächige Bauteile, als auch bereits dreidimensional vorgeformte oder aber endgeformte Bauteile konduktiv zu erwärmen. Bei der konduktiven Erwärmung ist der Anteil der Verlustwärme besonders gering, da im Wesentlichen ein Wärmeübergang aufgrund von Wärmeleitung über die Temperierplatte an die zu erwärmende Platine oder aber das zu erwärmende Bauteil erfolgt. Abstrahlende Wärme oder aber mit erwärmte Heizräume werden gänzlich vermieden. Die Temperierquelle, insbesondere Heizquelle, erwärmt somit die Temperierplatte, wobei die Temperierplatte durch Einlegen einer Blechplatine oder aber eines Bauteils in die Temperiervorrichtung und Schließen der Temperiervorrichtung mit der Platine oder aber dem Bauteil formschlüssig zum Anlagenkontakt mit unterer und/oder oberer Temperierplatte kommt, und somit konduktiv die Platine oder aber das Bauteil erwärmt. Im Rahmen der Erfindung ist auch ein nur einseitiger Kontakt möglich.

Hierdurch wird die notwendige Energie zur Erwärmung des Bauteils auf das Wesentliche reduziert, so dass durch den vollflächigen Kontakt eine schnelle und effiziente Erwärmung der Blechplatine und/oder des Bauteils erfolgt. Für die elektrische Widerstandserwärmung ist die Temperierplatte selbst als elektrischer Widerstand ausgebildet, wobei durch Anlegen einer Spannung sich maßgeblich ausschließlich die Temperierplatte erwärmt, nicht jedoch das Oberwerkzeug bzw. Unterwerkzeug.

Ein weiterer wesentlicher Vorteil der vorliegenden Erfindung ist, dass insbesondere die hohen Erstanschaffungskosten des Werkzeuges mit entsprechenden Temperiervorrichtungen sowie entsprechender Schließmechanik zunächst nur einmalig anfallen und im Anschluss daran die Temperiervorrichtung vielseitig durch bloßen Tausch der Temperierplatten für verschiedene Anwendungsfälle und Anwendungsformen nutzbar ist. Es müssen mithin nur die Temperierplatten erneuert oder aber ausgetauscht werden, nicht hingegen jedoch die gesamte Temperiervorrichtung. Hierdurch fallen nur einmalige Erstanschaffungskosten an, wobei durch die Austauschbarkeit der Temperierplatten aufwendige Umrüstarbeiten entfallen, wobei wiederum durch diese beiden Maßnahmen die Produktionskosten der Bauteile gering gehalten werden.

Weiterhin bevorzugt sind die Temperierplatten flächig zur Temperierung einer Blechplatine ausgebildet oder aber dreidimensional ausgebildet, wobei zwischen den Temperierplatten bei geschlossener Temperierstation ein Formhohlraum verbleibt. Im Falle von flächig ausgebildeten Temperierplatten ist es somit möglich, eine Blechplatine durch oberseitigen Kontakt mit der Temperierplatte am Oberwerkzeug und unterseitigen Kontakt mit der Temperierplatte am Unterwerkzeug konduktiv zu temperieren, insbesondere zu Erwärmen.

Als dritte Alternative ist es weiterhin möglich, dass bereits vorgeformte Bauteile durch die dreidimensional ausgebildeten Temperierplatten erwärmt werden, wobei der Formhohlraum zwischen den Temperierplatten der geschlossenen Temperierstation im Wesentlichen der Kontur des bereits vorgeformten Bauteiles entspricht. Hierbei ist es weiterhin vorteilig, dass das Bauteil während der konduktiven Temperierung zentriert und somit fest gehalten ist, wodurch Verzug vermieden wird.

Im Rahmen der Erfindung wird insbesondere ein härtbarer Stahl verarbeitet, insbesondere ein Bohrmanganstahl mit guten Warmform- und Vergütungseigenschaften.

Besonders bevorzugt wird härtbarer Stahl bei dem erfindungsgemäßen Verfahren verwendet, der als mikrolegierter Vergütungsstahl einzustufen ist. Dieser weist insbesondere folgende Legierungselemente als Massengewichtsprozentanteile auf:

| | |
|---|---|
| Kohlenstoff (C) | 0,19 bis 0,25% |
| Silizium (Si) | 0,15 bis 0,30% |
| Mangan (Mn) | 1,10 bis 1,40% |
| Phosphor (P) | 0 bis 0,025% |
| Schwefel (S) | 0 bis 0,015% |
| Chrom (Cr) | 0 bis 0,35% |
| Molybdän (Mo) | 0 bis 0,35% |
| Titan (Ti) | 0,020 bis 0,050% |
| Bor (B) | 0,002 bis 0,005% |
| Aluminium (Al) | 0,02 bis 0,06% |

### Rest Eisen und erschmelzungsbedingte Verunreinigungen.

Alternativ dazu ist es auch möglich, eine Stahllegierung zu verwenden, die nachfolgende Legierungsbestandteile, ausgedrückt in Massengewichtsprozent, aufweist:

| | |
|---|---|
| Kohlenstoff (C) | 0,14 - 0,3% |
| Mangan (Mn) | 0,8 - 2,5% |
| Silizium (Si) | 1,5 - 2,5% |
| Chrom (Cr) | max.0,4% |
| Aluminium (Al) | max. 0,1% |
| Nickel (Ni) | max.0,3% |
| Bor (B) | 0,0008 - 0,005% |
| Titan (Ti) | 0,005 - 0,1% |
| Niob (Nb) | max.0,1 % |

### Rest Eisen und erschmelzungsbedingte Verunreinigungen.

Um die Temperierstation möglichst universell und einem breiten Einsatzspektrum unterziehen zu können, ist sie derart ausgebildet, dass eine Temperierplatte mit dem Oberwerkzeug sowie eine Temperierplatte mit dem Unterwerkzeug gekoppelt ist, wobei die Temperierplatten universell für jeden Anwendungsfall austauschbar sind. Besonders bevorzugt sind die Temperierplatten dazu formschlüssig an dem Oberwerkzeug und/oder an dem Unterwerkzeug gekoppelt, vorzugsweise erfolgt eine Sicherung über Bolzen. Hierdurch ist es in besonders kurzer Rüstzeit möglich, die Temperierstation adaptiv an den jeweiligen Anwendungsfall anzupassen und bei Umstellung der Warmformlinie auf ein neues Produkt ausschließlich die Temperierplatten neu hergestellt werden müssen, nicht jedoch die Temperierstation mit einer aufwendigen Schließmechanik sowie den kostenintensiven Temperierquellen.

Weiterhin bevorzugt weist die Temperierplatte eine Beschichtung auf. Bei der Beschichtung handelt es sich insbesondere um eine zunderfeste Beschichtung, so dass ein Verrußen, Verdrecken oder aber auch Verzundern der Oberfläche der Temperierplatte maßgeblich unterbunden ist und somit die Betriebskosten der erfindungsgemäßen Temperierstation gering gehalten werden. Weiterhin kann die Beschichtung insbesondere derart hitzefest ausgebildet werden, dass ein Einbacken oder aber Ankleben von Beschichtungen der Platine oder aber des Bauteils selber oder aber einer Wärmeleitpaste unterbunden werden. Ferner ist die Beschichtung derart ausgebildet, dass sie verschleißfest ist, so dass die Temperierplatte insbesondere über den Zyklus einer Produktserie mit zu vernachlässigbaren Verschleißerscheinungen einsetzbar ist.

Im Rahmen der Erfindung ist es weiterhin möglich, dass die Platine oder aber das Bauteil selbst beschichtet sind, beispielsweise durch eine Aluminium-Silizium-Beschichtung oder aber auch eine Zinkbeschichtung, wobei die Beschichtung entweder im Ofen bereits sich fest mit der Bauteiloberfläche verbindet oder aber die Beschichtung selber während des Temperiervorganges in der Temperierstation sich fest mit der Bauteiloberfläche verbindet.

Weitere Vorteile, Merkmale, Eigenschaften und Aspekte der vorliegenden Erfindung sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine erfindungsgemäße Warmformlinie,
- Figur 2: eine erfindungsgemäße Temperierplatte mit zwei aufgelegten zu temperierenden Platinen und
- Figur 3a und: b eine Draufsicht und eine Seitenansicht auf eine Temperierplatte mit Dickensprung.

In den Figuren werden für gleiche oder ähnliche Bauteile dieselben Bezugszeichen verwendet, auch wenn eine wiederholte Beschreibung aus Vereinfachungsgründen entfällt.

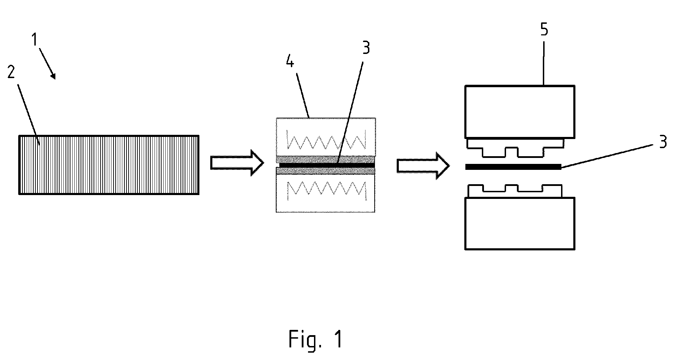

Figur 1 zeigt eine erfindungsgemäße Warmformlinie 1, wobei die Warmformlinie 1 einen Ofen 2 zur homogenen Erwärmung einer Platine 3 aufweist. Die Platine 3 wird nach der Erwärmung in dem Ofen in eine erfindungsgemäße Temperierstation 4 zur hier dargestellten gezielten lokalen Nacherwärmung transferiert. Nach Abschluss der Temperierung in der Temperierstation 4 wird die Platine 3 weiterhin in ein Umformwerkzeug 5 transferiert, wobei sie in dem Umformwerkzeug 5 warm umgeformt und anschließend abgeschreckt und dadurch pressgehärtet wird.

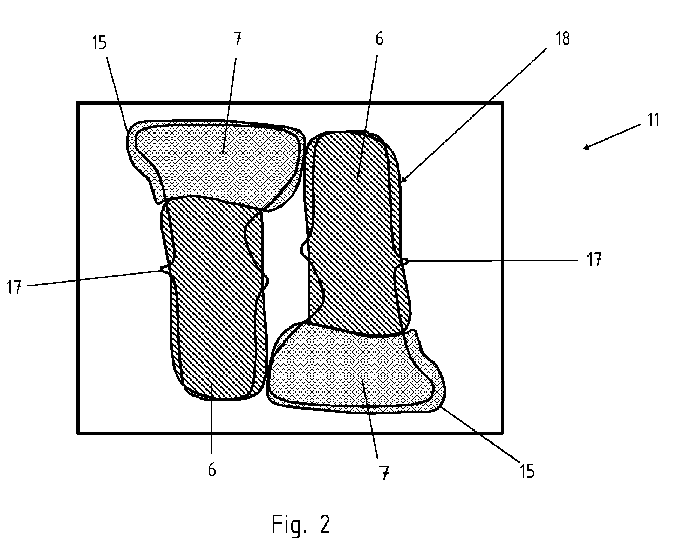

Figur 2 zeigt eine Temperierplatte 11 in einer Draufsicht mit aufgelegten Blechzuschnitten 17. Die Temperierplatte 11 ist dabei derart ausgebildet, dass in Bereichen zweiter Art 7 Isolierplatten 15 angeordnet sind und in Bereichen erster Art 6 die Temperierplatten 11 derart ausgebildet sind, dass sie mit den Bereichen erster Art 6 im Wesentlichen vollflächig konduktiv zur Anlage kommen. Dabei kommt es in Randbereichen 18, wie in Figur 2 schematisch angeordnet, nur zu geringfügigen Überschneidungen zwischen Rand des Bauteils sowie Rand des Kontakts zwischen Temperierplatte 11 und Bauteil sowie Isolierplatte 15, so dass der Energieeintrag in die Bauteile selbst im Rahmen der Erfindung möglichst effizient gestaltet ist und zu starke Verlustwärme, die beispielsweise an die Umgebungstemperatur abgegeben wird, vermieden wird.

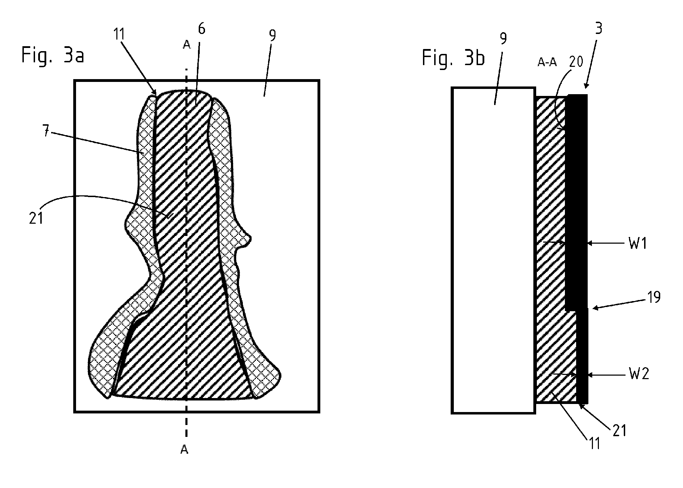

Figur 3a zeigt eine Temperierplatte 11 in einer Draufsicht auf einen Unterwerkzeug 9 ohne aufgelegte Platine. Die Temperierplatte 11 weist wiederum einen Bereich erster Art 6 sowie einen Bereich zweiter Art 7 auf, die voneinander verschieden temperierbar sind. Figur 3b zeigt eine Schnittansicht entlang der Linie A-A, jedoch mit aufgelegter Platine 3. Hierbei ist zu erkennen, dass die Platine 3 auf der Temperierplatte 11 aufliegt, wobei die Temperierplatte 11 selbst wiederum auf einem Unterwerkzeug 9 befestigt ist. Die Platine 3 selbst weist einen Dickensprung 19 auf, der spiegelsymmetrisch an der Temperierplatte 11 selbst ebenfalls ausgebildet ist. Somit kommt eine Unterseite 20 der Platine 3 selbst auf einer Oberfläche 21 der Temperierplatte 11 formschlüssig zur Anlage. Hierdurch ist es möglich, eine Platine 3 mit zwei voneinander verschiedenen Wandstärken W1, W2, wobei die Wandstärke W1 größer ist als die Wandstärke W2, um dem Dickensprung 19 selbst homogen zu erwärmen. Durch einfachen Tausch der Temperierplatte 11 kann somit die Temperierstation 4 in einfacher Art und Weise an eine jeweils zu erwärmende Platine 3 angepasst werden.

### Bezugszeichen:

- 1 -: Warmformlinie
- 2 -: Ofen
- 3 -: Platine
- 4 -: Temperierstation
- 5 -: Umformwerkzeug
- 6 -: Bereich erster Art
- 7 -: Bereich zweiter Art
- 8 -: Oberwerkzeug
- 9 -: Unterwerkzeug
- 10 -: Temperierquelle
- 11 -: Temperierplatte
- 12 -: Bauteiloberfläche
- 13 -: Luftspalt
- 14 -: Werkzeugoberfläche
- 15 -: Isolierplatte
- 16 -: Abstandhalter
- 17 -: Blechzuschnitte
- 18 -: Randbereich
- 19 -: Dickensprung
- 20 -: Unterseite zu 3
- 21 -: Oberfläche zu 11

- *Q̇* -: Wärmeübergang

## Patentansprüche

1. Temperierstation (4) zur Temperierung von Blechplatinen (3) und/oder Blechbauteilen mit einem Oberwerkzeug und einem Unterwerkzeug (9) und mindestens einer Temperierquelle zum Heizen, wobei die Temperierquelle als elektrische Widerstandserwärmungsquelle ausgebildet ist, wobei an dem Oberwerkzeug und/oder dem Unterwerkzeug (9) austauschbare Temperierplatten (11) zur konduktiven Temperierung anordnenbar sind, **dadurch gekennzeichnet, dass** die Temperierplatte (11) selbst als elektrischer Widerstand ausgebildet ist, wobei die Temperierplatte (11) auf über 1000 Grad Celsius erwärmbar ist.

2. Temperierstation nach Anspruch 1, **dadurch gekennzeichnet, dass** die Temperierplatten (11) flächig zur Temperierung einer Blechplatine (3) ausgebildet sind, wobei zwischen den Temperierplatten (11) bei geschlossener Temperierstation (4) ein Formhohlraum verbleibt.

3. Temperierstation nach Anspruch 1 oder 2, **dadurch gekennzeichnet, dass** eine Temperierplatte (11) mit dem Oberwerkzeug und/oder eine Temperierplatte (11) mit dem Unterwerkzeug (9) formschlüssig gekoppelt ist.

4. Temperierstation nach dem vorherigen Anspruch, **dadurch gekennzeichnet, dass** die Temperierplatte (11) formschlüssig über Bolzen an dem Oberwerkzeug und/oder dem Unterwerkzeug (9) gekoppelt ist.

5. Temperierstation nach einem der vorherigen Ansprüche, **dadurch gekennzeichnet, dass** die Temperierplatte (11) eine Beschichtung aufweist.

6. Temperierstation nach Anspruch 5, **dadurch gekennzeichnet, dass** die Beschichtung zunderfest ist.

## Claims

1. Temperature control unit (4) for the temperature control of sheet metal blanks (3) and/or sheet metal parts, with an upper tool and a lower tool (9) and at least one temperature control source for heating, wherein the temperature control source is formed as an electrical resistance heating source, wherein exchangeable temperature control plates (11) for the conductive temperature control can be arranged on the upper tool and/or on the lower tool (9), **characterised in that** the temperature control plate (11) itself is formed as an electrical resistance, wherein the temperature control plate (11) can be heated to above 1000° Celsius.

2. Temperature control unit according to claim 1, **characterised in that** the temperature control plates (11) are formed flat for the temperature control of a sheet metal blank (3), wherein a hollow space remains between the temperature control plates (11) when the temperature control unit (4) is closed.

3. Temperature control unit according to claim 1 or 2, **characterised in that** a temperature control plate (11) is coupled in positive engagement to the upper tool and/or a temperature control plate (11) is coupled in positive engagement to the lower tool (9).

4. Temperature control unit according to the preceding claim, **characterised in that** the temperature control plate (11) is coupled in positive engagement by bolts to the upper tool and/or to the lower tool (9).

5. Temperature control unit according to one of the preceding claims. **characterised in that** the temperature control plate (11) has a coating.

6. Temperature control unit according to claim 5, **characterised in that** the coating is scale resistant.

## Revendications

1. Poste de chauffe (4) pour le chauffage de plaques de tôle (3) et/ou de pièces en tôle comportant un outil supérieur et un outil inférieur (9) et au moins une source de chaleur pour chauffer, selon lequel la source de chaleur se présente sous la forme d'une source de chaleur à résistance électrique, selon lequel des plaques de chauffe (11) interchangeables sont agencées sur l'outil supérieur et/ou sur l'outil inférieur (9) pour conduire le processus de chauffe **caractérisé en ce que** la plaque de chauffe (11) est réalisée elle-même sous la forme d'une résistance électrique, et **en ce que** la plaque de chauffe (11) peut être chauffée au-delà de 1000° Celsius.

2. Poste de chauffe selon la revendication 1 **caractérisé en ce que** les plaques de chauffe (11) sont conformées planes pour le chauffage d'une plaque de tôle (3), poste de chauffe selon lequel subsiste entre les plaques de chauffe (11) une chambre creuse lorsque le poste de chauffe (4) est à l'état fermé.

3. Poste de chauffe selon la revendication 1 ou 2 **caractérisé en ce qu'**une plaque de chauffe (11) est encastrée dans l'outil supérieur et/ou une plaque de chauffe (11) est encastrée dans l'outil inférieur (9) par ajustement de forme.

4. Poste de chauffe selon la revendication précédente **caractérisé en ce que** la plaque de chauffe (11) est encastrée par ajustement de forme dans l'outil supérieur et/ou dans l'outil inférieur (9) avec des boulons.

5. Poste de chauffe selon l'une des revendications précédentes **caractérisé en ce que** la plaque de chauffe (11) présente un revêtement.

6. Poste de chauffe selon la revendication 5 **caractérisé en ce que** le revêtement est résistant au calaminage.
